# EUROPÄISCHE PATENTSCHRIFT

(11) **EP 2 563 546 B1**
(45) Veröffentlichungstag und Bekanntmachung des Hinweises auf die Patenterteilung: **22.03.2017**
(21) Anmeldenummer: 11718332.7
(22) Anmeldetag: 27.04.2011
(51) Int. Cl.: B23P 19/04, B60J 10/00

(54) **BEARBEITUNGSEINRICHTUNG**
PROCESSING DEVICE
DISPOSITIF DE TRAITEMENT

(30) Priorität: 27.04.2010 DE 202010005313 U
(43) Veröffentlichungstag der Anmeldung: 06.03.2013
(73) Patentinhaber: KUKA Roboter GmbH, 86165 Augsburg (DE)
(72) Erfinder: MAISCHBERGER, Johann, 86424 Dinkelscherben (DE)
(74) Vertreter: Ernicke, Klaus Stefan
(86) Internationale Anmeldenummer: PCT/EP2011/056649
(87) Internationale Veröffentlichungsnummer: WO 2011/134994

(56) Entgegenhaltungen:
- EP-A1- 1 211 052
- EP-A1- 1 950 125
- WO-A2-2004/035897
- DE-A1- 3 727 462
- DE-A1-102004 035 205
- DE-U1-202006 002 159
- US-A- 4 620 354
- US-A- 5 814 959
- US-A1- 2006 048 364

## Beschreibung

Die Erfindung betrifft eine Bearbeitungseinrichtung, insbesondere eine Applikationseinrichtung, nebst Verfahren mit den Merkmalen im Oberbegriff der selbstständigen Ansprüche.

In der Praxis bekannte Bandauftragesysteme für Klebe- oder Dichtbänder arbeiten üblicherweise in 2-dimensionaler Anwendung, wobei flache Bänder auf ebene Werkstückoberflächen aufgetragen werden. Sofern profilierte Bandprofile appliziert werden, werden sie in ihrer vorgegebenen Form verarbeitet.

Eine solche Bandaufbringvorrichtung ist aus der DE 20 2007 003 696 U1 bekannt. Sie besteht aus einem Applikationswerkzeug und einer Medienversorgung, die gemeinsam an der Hand eines üblichen mehrachsigen und mehrgliedrigen Industrieroboters angebaut werden können. Die Bandauftragvorrichtung hat ein erhebliches Gewicht und wird von dem mittels einer vorprogrammierten Bahn gesteuerten Roboter relativ zum stationär an einem Träger gehaltenen Werkstück bewegt. Der Roboter hat positionsgenau ansteuerbare Achsen.

Die US 4,620,354 A zeigt ebenfalls einen mehrachsigen und mehrgliedrigen positionsgesteuerten Roboter mit einem Werkzeug zum Anbringen eines Dichtungsbandes an einer Fahrzeugkarosserie. Hierbei ist im Werkzeug eine federbelastete Andrückrolle für das Dichtungsband angeordnet, die lediglich ausweicht und keinen eigenen Antrieb hat.

Für die EP 1 211 052 A1 gilt entsprechendes. Auch hier ist eine Druckeinheit vorhanden, die Bestandteil des Werkzeugs bzw. des sogenannten Applikationskopfes ist. Der Applikationskopf kann von einem Roboterarm geführt werden.

Die DE 20 2006 002 159 U1 zeigt ebenfalls einen positionsgesteuerten Roboter mit einem
Applikationswerkzeug. Im Werkzeug ist eine Andrückeinrichtung bzw. ein Zustellantrieb einer Führungs- oder Zentriereinrichtung angeordnet.

Bei der EP 1 950 125 A1 wird ein als Roller Unit bezeichnetes Werkzeug von einem Roboter zugestellt und besitzt einen werkzeugseitigen Sensor. Der Roboter kann hierüber gesteuert und positioniert werden.

Die DE 37 27 462 A1 betrifft eine Bandlegemaschine, bei der ein positionsgesteuerter Portalroboter einen Bandlegekopf an ein Werkstück zustellt. Sensoren kontrollieren auf optischem Wege Bandkanten und Abstände.

Auch die WO 2004/035897 A2 zeigt einen üblichen positionsgesteuerten Roboter mit einem Bandauftragewerkzeug.

Es ist Aufgabe der vorliegenden Erfindung, eine bessere Bearbeitungstechnik, insbesondere Applikationstechnik, aufzuzeigen.

Die Erfindung löst diese Aufgabe mit den Merkmalen in den selbstständigen Ansprüchen.
Die beanspruchte Bearbeitungstechnik, d.h. die Bearbeitungseinrichtung und das Bearbeitungsverfahren, haben den Vorteil, dass sie eine räumliche Bearbeitung und insbesondere eine räumliche Applikation von Medien an einem Werkstück ermöglicht. Das Werkstück kann dabei eine räumlich veränderliche Kontur mit Wölbungen, Eckbereichen und sonstigen 3D-Formänderungen haben. Ferner ist es möglich, das applizierte Medium, bei dem es sich beispielsweise um ein bahnförmiges Medium, insbesondere um ein Band, handeln kann, räumlich zu verformen und mit entsprechend veränderter Formgebung zu applizieren.

Ein weiterer Vorteil der beanspruchten Bearbeitungstechnik ist die hohe Präzision der Bearbeitung, insbesondere Applikation von Medien. Der mehrachsige Manipulator mit der oder den nachgiebigen Achsen kann wie der Arm und die Hand eines Menschen funktionieren. Er braucht nur ein relativ leichtes Applikationswerkzeug zu tragen, wobei die höhergewichtigen Teile der Medienversorgung getrennt von Manipulator angeordnet sein können und nicht mitbewegt werden müssen. Das Applikationswerkzeug kann eine reduzierte Funktion haben und braucht nur für einen Medienauftrag und ggf. ein Verformen und Anlegen sowie ggf. Anpressen des Mediums zu sorgen. Es kann ferner eine Ausgestaltung und ein Gewicht haben, die auch für einen manuellen Betrieb geeignet sind, sodass das Werkzeug auch manuell gehalten und die Applikation wahlweise manuell oder mit dem Manipulator ausgeführt werden kann.

Durch die angetriebene(n) nachgiebige(n) Achse(n) kann der Manipulator eine konstante und fehlerfreie Medienapplikation gewährleisten. Die nachgiebige Achse(n) besitzt eine Nachgiebigkeitsregelung, mit der die Achse(n) und damit auch der Manipulator auf eine einwirkende Kraft nachgeben kann. Bei der Nachgiebigkeitsregelung wird eine reine Kraftregelung oder eine Kombination aus Positions- und Kraftregelung angewendet.

Die Applikation ist an einem stationären und alternativ auch an einem bewegten Werkstück möglich. Hierfür ist eine entsprechende Bewegungseinrichtung vorgesehen, die für eine Relativbewegung zwischen Medium und Werkstück sorgt. Der besagte mehrachsige Manipulator kann dementsprechend stationär oder instationär angeordnet sein.

Seine nachgiebige(n) Achse(n) erlauben ein federndes Ausweichen des Applikationswerkzeugs. Die Applikationskraft, insbesondere die Andrückkraft, kann auf einem vorbestimmten Wert und insbesondere konstant gehalten werden. Der Manipulator kann außerdem eine Positionssteuerung aufweisen, mit der die Achse(n) und das Applikationswerkzeug nach einem evtl. Ausweichen wieder in die vorgegebene Arbeitsposition zurückkehren können.

Durch den mehrachsigen Manipulator mit den nachgiebigen und ggf. positionsgesteuerten Achsen kann das Applikationswerkzeug auch komplizierten Formgebungen und Konturen des Werkstücks und der Bearbeitungsbahn folgen und eine dreidimensionale Applikation mit hoher Präzision ermöglichen. Ein weiterer Vorteil liegt in der erleichterten Teachbarkeit des vorzugsweise auf eine vorgegebene Bahn oder Position programmierten Manipulators. Durch die nachgiebigen Achsen lässt sich der Manipulator mit dem angebauten Applikationswerkzeug ggf. manuell führen, wobei die Achspositionen in einem Bahn- oder Positionsprogramm gespeichert werden. Durch die nachgiebigen Achsen ist trotz Verfolgung der werkstückspezifischen und applikationsspezifischen Bahn ein Ausweichen des Applikationswerkzeugs bei etwaigen Bahnfehlern oder anderen Positions- oder Formfehlern möglich. Hierdurch können auch Toleranzen am Werkstück aufgenommen werden. Falls das Werkstück von einem zweiten Manipulator im Raum bewegt wird, können dessen Bahn- oder Positionierfehler durch die nachgiebigen Achsen kompensiert werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Applikationseinrichtung für ein bandförmiges Medium in perspektivischer Ansicht,
- Figur 2:: eine vergrößerte Darstellung eines Applikationswerkzeugs mit abgebrochener Darstellung eines mehrachsigen Manipulators mit nachgiebigen Achsen,
- Figur 3:: eine vergrößerte Darstellung eines mehrachsigen Manipulators zur Führung des Applikationswerkzeugs,
- Figur 4:: eine Variante der Bearbeitungseinrichtung von Figur 1 und
- Figur 5 bis 7:: mehrere Darstellungen eines applizierten Klebebands sowie einer Falzbildung.

Die Erfindung betrifft eine Bearbeitungseinrichtung (1) zum bevorzugt bahnförmigen Bearbeiten von Werkstücken (3). Sie ist vorzugsweise als Applikationseinrichtung zum Applizieren eines Mediums (2) an einem Werkstück (3) ausgebildet. Ferner betrifft die Erfindung ein Bearbeitungs- oder Applikationsverfahren.

Die Bearbeitung der Werkstücke kann unterschiedliche Prozesse und Verfahren betreffen. In der bevorzugten und gezeigten Ausführungsform wird ein Medium (2) entlang einer Bearbeitungs- oder Applikationsbahn (4) an einem Werkstück (3) angebracht. Diese Applikation kann kontinuierlich oder intermittierend, d.h. vorzugsweise in Bahnabschnitten, erfolgen. Ggf. ist auch ein punktweiser Medienauftrag möglich. Das Medium (2) kann von beliebiger Konsistenz und Form sein und kann aus beliebig geeigneten Werkstoffen bestehen.

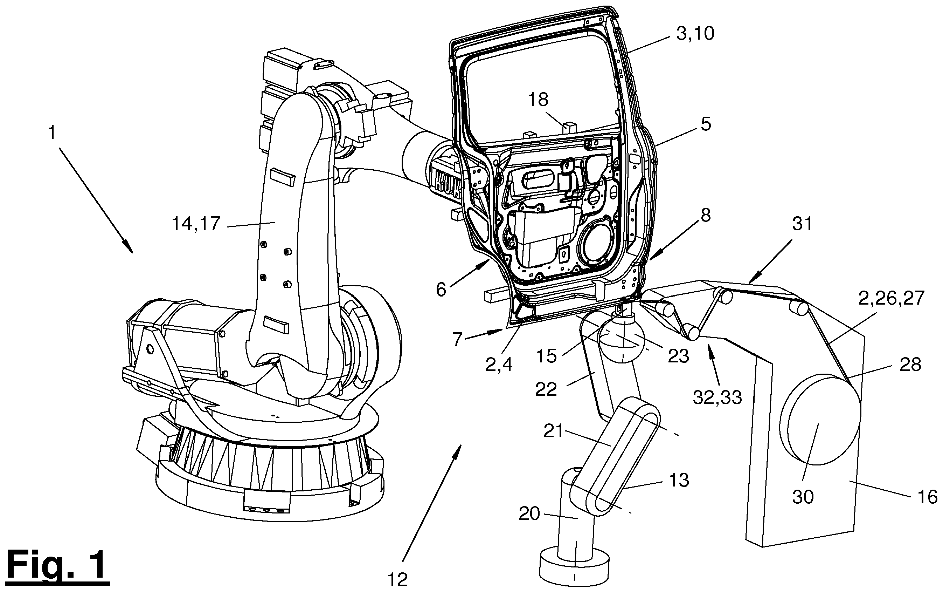

Figur 1 zeigt in einer perspektivischen Darstellung ein Ausführungsbeispiel für eine Applikationseinrichtung (1). Das Medium (2) ist in diesem Fall als bahnförmiges Medium (26), insbesondere als flaches oder profiliertes Band, ausgebildet. Das Band (26) weist z.B. ein Klebeband (27) und ggf. ein oder mehrere darauf angeordnete Deckbänder (28) auf. Das Medium (2), insbesondere das Band (26) bzw. Klebeband (27), soll auf einer Bearbeitungsbahn (4) am Werkstück (3) appliziert werden. Diese Bearbeitungsbahn (4) kann eine räumliche Formgebung haben und kann einen unterbrochenen oder nicht unterbrochenen Verlauf besitzen. Das Medium (2), insbesondere das Band (26) bzw. Klebeband (27), kann dabei räumlich aus seiner ursprünglich ebenen Gestalt verformt werden. Es kann dabei auch ggf. gedehnt und/oder gestaucht werden, sofern es eine entsprechende Elastizität bietet. Das Band (26,27) kann zumindest biegeelastisch und zugfest oder dehnelastisch sein.

Die Bearbeitungs- bzw. Applikationseinrichtung (1) weist ein Bearbeitungswerkzeug (15), eine Medienversorgung (16) und eine Bewegungseinrichtung (12) zur Erzeugung einer Relativbewegung zwischen dem Medium (2) und dem Werkstück (3) auf. Diese können in unterschiedlicher Weise ausgebildet sein und funktionieren.

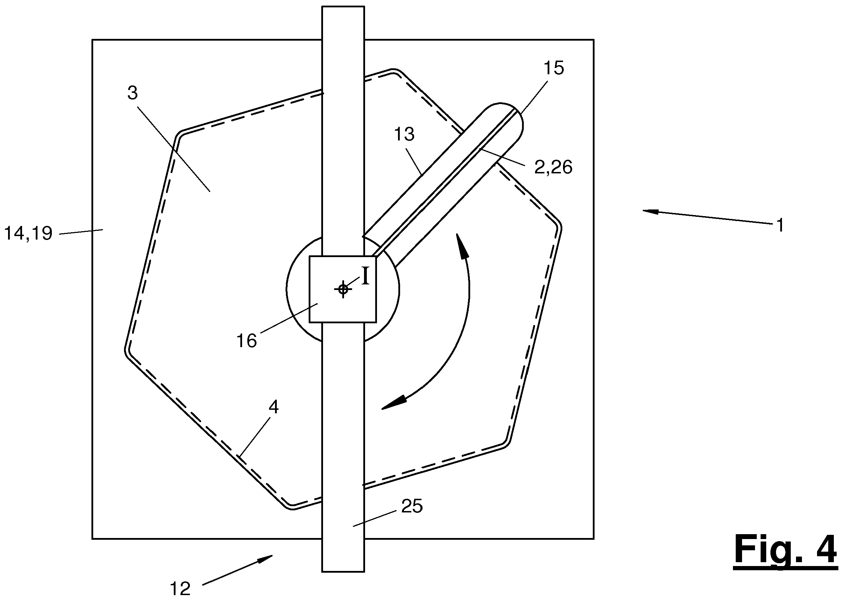

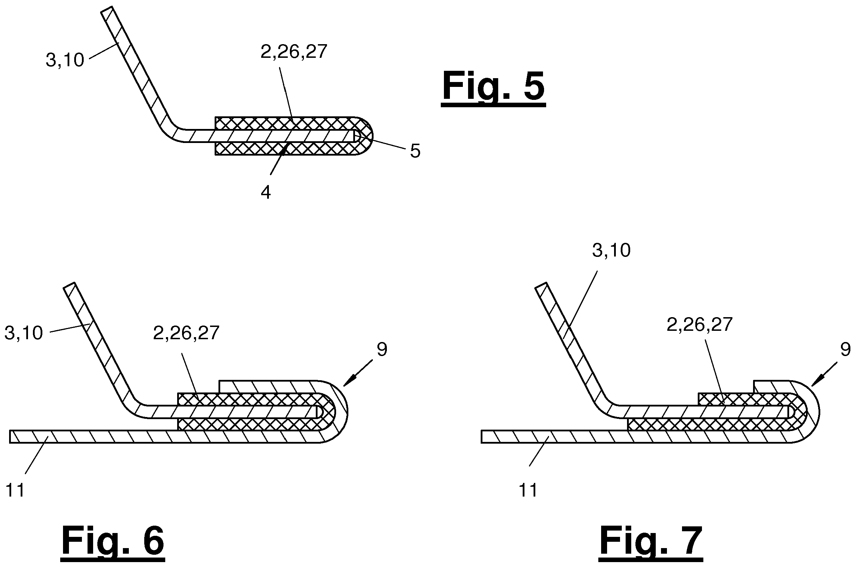

Das Werkstück (3) kann von beliebiger Art, Form und Größe sein und kann aus beliebigen Werkstoffen bestehen. Es kann einteilig oder mehrteilig sein. Bei den in Figur 1 und 4 gezeigten Ausführungsbeispielen handelt es sich um ein Karosseriebauteil aus Metall, insbesondere um das Innenteil (10) einer Seitentüre eines Kraftfahrzeugs. Die Bearbeitungsbahn (4) wird in diesen Ausführungsbeispielen durch die spätere Bildung eines in Figur 5 und 6 gezeigten Falzes (9) an der fertigen Türe definiert. An dem gezeigten Innenteil (10) verläuft die Bearbeitungsbahn (4) an dessen äußerem Rand (5). Falls das Werkstück (3) Öffnungen hat, kann auch an diesem Öffnungsrand ein Medium (2,26,27) appliziert werden. Der Rand (5) kann in Längsrichtung einen nicht-linearen Verlauf mit Krümmungen aufweisen.

Wie Figur 1 verdeutlicht, kann die Bearbeitungs- oder Applikationsbahn (4) eine oder mehrere Wölbungen oder Kurven (6), einen oder mehrere Eckbereiche (7) mit kleinerem Krümmungsradius und/oder eine oder mehrere Charakterlinien (8) aufweisen. Letztere können z.B. Sicken oder Knicklinien an der äußeren Karosseriefläche bzw. Türfläche sein.

Die Bewegungseinrichtung (12) wird im Ausführungsbeispiel von Figur 1 bis 3 von einem mehrachsigen Manipulator (13) zur Führung eines Applikationswerkzeuges (15) und von einer Halteeinrichtung (14) für das Werkstück (3) gebildet, welche in diesem Ausführungsbeispiel aus einem mehrachsigen Manipulator (17) mit einer Greifeinrichtung (18) besteht. Der Manipulator (17) ist z.B. als Industrieroboter, insbesondere als sechsachsiger Gelenkarmroboter, ausgebildet. Er kann ansonsten eine beliebige Zahl und Kombination von rotatorischen und/oder translatorischen gesteuert antreibbaren Achsen aufweisen. Er führt mittels der Greifeinrichtung (18) das aufgenommene Werkstück (3) entlang einer vorgegebenen und in der Robotersteuerung programmierten Bahn gegenüber dem vom anderen Manipulator (13) gehaltenen Bearbeitungs- oder Applikationswerkzeug (15). Der andere Manipulator (13) und das Bearbeitungs- oder Applikationswerkzeug (15) können dabei eine vorgegebene Position einnehmen und halten, wobei Ausweich- oder Ausgleichbewegungen möglich sind.

In Abwandlung der gezeigten und nachfolgend näher beschriebenen Ausführungsform von Figur 1 kann der andere Manipulator (13) an anderer Stelle angeordnet sein und eine andere Ausrichtung haben, wobei er z.B. an einer Wand oder einem Sockel seitlich oder hängend angebaut ist und eine horizontale oder schräge Ausrichtung hat. Ferner kann der andere Manipulator (13) eigenständig gesteuerte Bewegungen mit seinem Werkzeug (15) relativ zum Werkstück (3) und ggf. zur Bearbeitungsbahn (4) ausführen. Die von den Manipulatoren (13,17) bewirkten Werkstück- und Werkzeugbewegungen können sich dabei überlagern.

Figur 4 zeigt eine Variante der Bearbeitungseinrichtung bzw. Applikationseinrichtung (1) von Figur 1. Die Halteeinrichtung (14) ist in dieser Ausführung stationär und besteht z.B. aus einem Tisch oder einem gestellartigen Träger (19) mit geeigneten Spanneinrichtungen oder anderen Aufnahmemitteln für ein Werkstück (3). Das Werkstück (3) wird hierbei stationär gehalten, wobei der Manipulator (13) mit dem Bearbeitungs- oder Applikationswerkzeug (15) sich gegenüber dem Werkstück (3) bewegt und die besagte Relativbewegung der Bewegungseinrichtung (12) ausführt.

In Abwandlung der Ausführungsform von Figur 4 kann die dortige Halteeinrichtung (14) eine oder mehrere Bewegungsachsen haben, wobei z.B. der gezeigte Tisch (19) eine Dreh- oder Schiebeachse aufweist. Die Halteeinrichtung (14) kann alternativ oder zusätzlich eine Kippachse besitzen, um das Werkstück (3) mit dem jeweils beaufschlagten Bereich der Bearbeitungsbahn (4) in eine besser zugängliche und applikationsgerechte Stellung zu bringen.

In der Ausführungsform von Figur 4 ist der Manipulator (13) über der Halteeinrichtung (14) angeordnet. Er kann dabei an einer geeigneten Trageinrichtung (25), z.B. einem Portal, befestigt sein und beispielsweise eine Hängelage einnehmen. Er kann sich dabei um eine aufrechte Achse (I) drehen und kann bei einer im wesentlichen zentrischen Anordnung alle Randbereiche des Werkstücks (3) bzw. eine dortige Bearbeitungsbahn (4) mit seinem Werkzeug (15) erreichen.

Der Manipulator (13) ist in der Ausführungsform von Figur 1 am Boden angeordnet und nimmt für den Applikationsprozess eine aufrechte und ggf. gestreckte Lage ein. Er besteht aus mehreren gelenkig miteinander verbundenen und mit Achsantrieben versehenen Gliedern (20,21,22,23), von denen das letzte Glied (23) einen Anschluss (34) zur Befestigung des Applikationswerkzeugs (15) aufweist. Der Manipulator (13) hält das Werkzeug (15) von unten und drückt es gegen das Werkstück (3) und ggf. gegen die Bearbeitungsbahn (4).

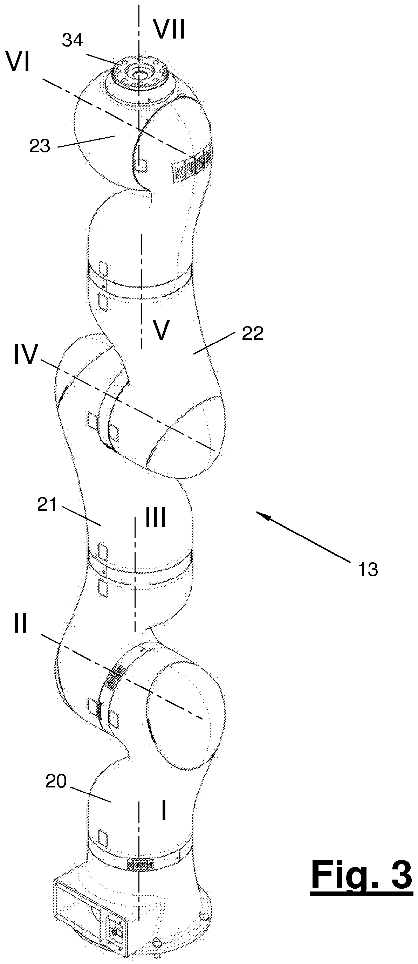

Der Manipulator (13) hat eine oder mehrere nachgiebige Achsen (I-VII) und besitzt einen oder mehrere steuerbare oder regelbare Achsantriebe, die in die Gelenkverbindungen zwischen den Gliedern (20,21,22,23) integriert sein können. Ferner können gemäß Figur 3 die länglichen Glieder (20,21,22,23) in sich beweglich sein und längs ihrer Erstreckung ausgerichtete Achsen, insbesondere Drehachsen, mit entsprechenden Antrieben aufweisen.

Figur 3 zeigt den Manipulator (13) in Streckstellung mit der Kette der untereinander gelenkig verbundenen Glieder (20,21,22,23) und ihrer angetriebenen Achsen (I-VII). Die Glieder (20,21,22,23) sind dabei schräg zueinander ausgerichtet, was in der Strecklage noch Ausweichbewegungen des Manipulators (13) und seines Werkzeugs (15) in Streckrichtung, z.B. in vertikaler oder schräger Richtung erlaubt.

Im gezeigten Ausführungsbeispiel von Figur 3 hat der Manipulator (13) sieben Achsen (I-VII), die allesamt als Drehachsen ausgebildet sind. Alternativ kann er eine andere Zahl, Anordnung und Ausbildung von Achsen haben. Die Achsen können als rotatorische und/oder translatorische Achsen ausgeführt sein. Sie können allesamt oder nur zum Teil nachgiebig sein. In Figur 1 ist eine abgewandelte Ausführungsform mit fünf rotatorischen Achsen dargestellt. In dieser Ausführung fehlt den Gliedern (21,22) die interne Drehachse.

Ein Manipulator (13) kann auch eine andere Achszahl, z.B. eine, zwei, drei, vier, sechs oder auch mehr als sieben nachgiebige Achsen (I-VII) besitzen. Die nachgiebige Achse(n) (I-VII) sind z.B. rotatorische Achse(n). Alternativ oder zusätzlich können auch eine oder mehrere translatorische und ggf. ebenfalls nachgiebige Achsen vorhanden sein. Ein Manipulator (13) kann außerdem eine oder mehrere rotatorische und/oder translatorische angetriebene Achsen ohne Nachgiebigkeit und z.B. mit exakter Positionssteuerung oder -regelung aufweisen.

Der Manipulator (13) hat eine nicht dargestellte Steuerung und kann programmiert werden. Er dient zur Handhabung und Positionierung des Applikationswerkzeugs (15) relativ zum Werkstück (3). Die Achsen bzw. Gelenke sind in der vorerwähnten Weise nachgiebig und gestatten Ausweichbewegungen des Applikationswerkzeugs (15), wobei die Ausweichrichtung z.B. normal zur örtlichen Formgebung des Werkstücks (3) oder der Bearbeitungsbahn (4) ausgerichtet ist. In den gezeigten Ausführungsformen von Figur 1 und 3 mit der aufrechten Manipulatorausrichtung und insbesondere der Strecklage kann die Nachgiebigkeit in vertikaler Richtung gegeben sein. Bei der Ausführungsform von Figur 1 hält der Manipulator (13) das Applikationswerkzeug (15) z.B. in einer vorgegebenen Höhenlage und ggf. auch in einer bestimmten Dreh- und/oder Kipplage relativ zum Werkstück (3), sodass es die korrekte Ausrichtung zur örtlichen Formgebung der Bearbeitungs- oder Applikationsbahn (4) hat.

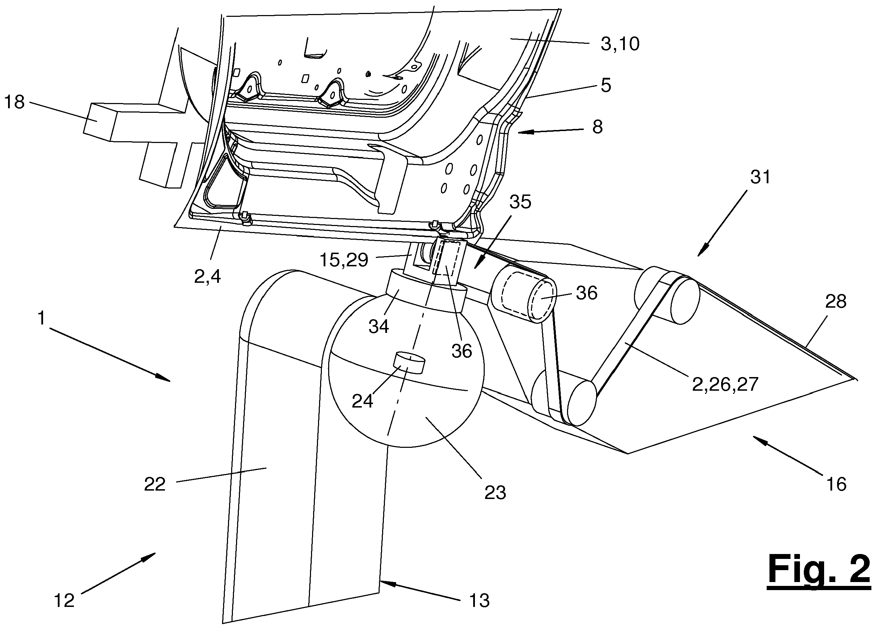

Wie Figur 2 in einer Schemadarstellung verdeutlicht, können an den Gliedern (20,21,22,23) und insbesondere im Bereich ihrer Bewegungsachsen (I-VII) ein oder mehrere Sensoren (24) oder andere Geräte zur Ermittlung der auftretenden Belastungen angeordnet sein. Dies können insbesondere von außen über das Bearbeitungs- oder Applikationswerkzeug (15) durch den Prozess eingeleitete Kräfte oder Momente sein. Die Sensoren (24) sind mit der Manipulatorsteuerung oder mit einzelnen Achssteuerungen und den Achsantrieben gekoppelt.

Der Manipulator (13) kann eine oder mehrere kraftgesteuerte oder kraftgeregelte Achsen (I-VII) und zugehörige Achsantriebe aufweisen. Alternativ ist auch eine kombinierte Kraft- und Positionssteuerung oder - regelung möglich. Hierdurch kann eine vorbestimmte Andrückkraft des Bearbeitungs- oder Applikationswerkzeugs (15) an das Werkstück (3), insbesondere an dessen Bearbeitungsbahn (4), eingestellt werden. Die Einstellung der Andrückkraft kann in mehreren Richtungen bzw. Raumachsen gegeben sein. Mittels einer Kraftregelung kann diese Andrückkraft nach ein oder mehreren Richtungen konstant gehalten werden. Dies erlaubt eine nachgiebige Achsausbildung, wobei durch entsprechendes Nachgeben von ein oder mehreren Achsen (I-VII) das Werkzeug (15) bei etwaigen Ungenauigkeiten des Werkstücks (3) bzw. der Bearbeitungsbahn (4) ausweichen kann. Derartige Ungenauigkeiten können z.B. durch Toleranzen in der Formgebung und/oder in der Positionierung hervorgerufen sein. Etwaige Formüberstände an der Bearbeitungsbahn (4), z.B. ein Übermaß am Werkstückrand (5), können z.B. das Werkzeug (15) bei der Werkstückbewegung wegdrücken.

Der Manipulator (13) kann eine Federfunktion aufweisen, wobei er das Werkzeug (15) der betreffenden Kontur des Werkstücks (3) bzw. der Bearbeitungsbahn (4) nachführt. Wenn die vorerwähnte Formungenauigkeit, z.B. das Randübermaß, überwunden ist, kehrt das Werkstück (3) durch entsprechende Achssteuerung wieder in die Soll-Lage zurück. Dies wird z.B. erreicht, indem die an der Ausweichbewegung beteiligten Achsen (I-VII) und ggf. auch andere Achsen unter der Kraftregelung wieder zurückbewegt werden, bis die vorgegebene äußere Belastung wieder besteht.

Im vorbeschriebenen Ausführungsbeispiel wird das Bearbeitungs- oder Applikationswerkzeug (15) mit einer vorgegebenen, in ein oder mehreren Richtungen wirkenden Kraft an das Werkstück (3) bzw. die Bearbeitungsbahn (4) angedrückt. Diese vorgegebenen Andrückkräfte äußern sich in der vorerwähnten vorgegebenen Belastung für die verschiedenen Achsen (I-VII) oder Glieder (20,21,22,23).

In einer anderen Variante kann das Bearbeitungs- oder Applikationswerkzeug (15) kraftlos am Werkstück (3) bzw. der Bearbeitungsbahn (4) gehalten werden, wobei sich die besagten Ungenauigkeiten in einem Kontakt und einem Kraftaufbau äußern, der durch die Nachgiebigkeit von ein oder mehreren Achsen (I-VII) wieder aufgehoben wird.

Der Manipulator (13) kann eine programmierbare Manipulatorsteuerung aufweisen. In der Steuerung können Positionen für die verschiedenen Achsstellungen und für das Werkzeug (15) vorgegeben sein. Der Manipulator (13) kann somit eine Positionssteuerung aufweisen. In dem Steuerprogramm kann z.B. bei der Ausführungsform von Figur 1 in Abhängigkeit von der Bewegung der Halteeinrichtung (14), insbesondere des Manipulators (17) und der daraus resultierenden Werkstückbewegung (3), zu jedem Punkt der Bearbeitungsbahn (4) eine zugehörige Werkzeugposition vorgegeben und gespeichert sein. Diese von der Relativbewegung der Bearbeitungsbahn (4) gegenüber dem Werkzeug (15) abhängige Position versucht der Manipulator (13) mit seinen nachgiebigen Achsen (I-VII) anzufahren. Die Steuerung des Manipulators (13) kann zu diesem Zweck mit der Steuerung der Halteeinrichtung (14), insbesondere des Manipulators (17), verbunden oder ggf. auch in diese integriert sein.

Der Manipulator (13) kann z.B. in konstruktiver und steuerungstechnischer Hinsicht entsprechend der DE 10 2007 063 099 A1 ausgebildet sein. Die konstruktive Ausführung der Gelenk- oder Achsenantriebe mit der Kraftsteuerung bzw. Kraftregelung kann beispielsweise entsprechend der DE 10 2007 014 023 A1 oder der DE 10 2007 028 758 B4 ausgeführt sein.

Der Manipulator (13) zur Führung des Bearbeitungs- oder Applikationswerkzeugs (15) hat eine Reihe signifikanter Funktionen und Vorteile. Er bietet eine Redundanz durch mehrere Achsen, z.B. die gezeigten fünf oder sieben Achsen. Dies verbessert die Zugänglichkeit und die Positioniergenauigkeit des Werkzeugs (15). Er besitzt eine programmierbare Steifigkeit, die wahlweise achsspezifisch und/oder kartesisch sein kann. Hierfür sind Kraft- oder Momentensensoren in oder an jeder Achse und ein schneller Regeltakt von Vorteil. Aus dieser Konfiguration resultiert auch eine aktive Schwingungsdämpfung und eine besonders gute Bewegungsperformance. Der Manipulator (13) kann hoch performante, kraftgeregelte Prozesse durchführen und gestattet durch seine Beweglichkeit eine Vereinfachung und Gewichtsreduzierung des geführten Bearbeitungs- oder Applikationswerkzeugs (15). Die in manchen Fällen bei vorbekannten Applikationswerkzeugen vorhandenen Zusatzachsen können entfallen, wobei die diesbezüglichen Beweglichkeiten vom Manipulator (13) übernommen werden.

Weitere Vorteile des Manipulators (13) liegen in seinem geringen Gewicht und seiner kleinen Bauform. Der Arbeitsbereich kann gegenüber konventionellen Gelenkarmrobotern und insbesondere gegenüber dem Roboter (17) für die Werkstückbewegung deutlich reduziert sein. Der in den verschiedenen Ausführungsbeispielen gezeigte Manipulator (13) kann z.B. in seiner Streckstellung eine resultierende Armlänge von ca. 1 m, vorzugsweise 0,7 - 1,2 m, mit einem entsprechenden Durchmesser des Arbeitsbereichs haben. Der Manipulator (13) bietet ferner eine geringe Leistungsaufnahme, wobei hieraus und aus dem geringen Gewicht eine hohe Mobilität resultiert. Der kleine und leichte Manipulator (13) ist außerdem ortsflexibel und kann in der vorerwähnten Weise in einer beliebig geeigneten Position montiert werden. Durch die Nachgiebigkeit seiner Achsen (I-VII) ist außerdem eine hohe Sicherheit gewährleistet, insbesondere eine Unfallsicherheit bei einem evtl. Berührungskontakt mit einem Werker.

Wie Figur 1 und 4 verdeutlichen, kann die Medienversorgung (16) örtlich getrennt vom Manipulator (13) und vom Bearbeitungswerkzeug (15) angeordnet sein. Das Gewicht der Medienversorgung (16) muss daher vom Manipulator (13) nicht mitbewegt werden. Insbesondere ist es möglich, in der gezeigten Ausführung die Medienversorgung (16) stationär anzuordnen. Sie kann bedarfsweise ein oder mehrere eigene Bewegungsachsen aufweisen.

Die Medienversorgung (16) kann in Anpassung an das jeweilige Medium (2) in unterschiedlicher und beliebig geeigneter Weise ausgebildet sein. Sie bietet z.B. einen Medienvorrat (30), insbesondere einen Bandvorrat, und eine Zuführeinrichtung (31) für das Medium (2,26) zum Bearbeitungs- oder Applikationswerkzeug (15) am Manipulator (13). Die Medienversorgung (16) kann z.B. eine Abzugeinrichtung (32) für ein Medienteil aufweisen und kann auch eine Entsorgungseinrichtung (33) für Medienteile besitzen. Alternativ oder zusätzlich kann die Medienversorgung (16) weitere Komponenten aufweisen.

Im gezeigten Ausführungsbeispiel von Figur 1 und 2 wird ein bahnförmiges Medium (26) am Werkstück (3) und an dessen Bearbeitungsbahn (4) appliziert. Hierbei handelt es sich z.B. um ein Band. Dieses kann insbesondere ein Klebeband (27) beinhalten, das an einer oder beiden Seiten ggf. mit einem lösbaren Deckband (28) versehen ist. Der Medienvorrat(30) kann als Bandvorrat, insbesondere als drehbarer und ggf. mit einem Antrieb versehener Wickel ausgeführt sein, wobei die Zuführeinrichtung (31) mehrere Führungs- und Antriebsrollen aufweisen kann und außerdem ein Mittel besitzt, um das Band (26), insbesondere das Klebeband (27), zum Applikationswerkzeug (15) zu transportieren. Mittels einer in Figur 1 nur durch einen Pfeil schematisch angedeuteten Abzugeinrichtung (32) kann das Deckband (28) vor der Applikation vom Klebeband (27) gelöst werden und mittels einer Entsorgungseinrichtung (33), z.B. einem leeren Bandwickel, aufgenommen und zur Entsorgung bereit gestellt werden.

Das Applikationswerkzeug (15) ist für ein bahnförmiges Medium (26), insbesondere für ein Band, ausgebildet und besitzt eine Führungseinrichtung (29) zum Anlegen des Mediums (2,26,27) an das Werkstück (3) bzw. die Bearbeitungsbahn (4). Falls eine räumliche Anlage erforderlich ist, kann die Führungseinrichtung (29) auch eine geeignete Ausbildung zum Verformen des Mediums (2,26,27) haben. Hierbei wird z.B. ein ursprünglich flaches und ebenes Band (26,27) zu einer U-Form um eine Längsachse gebogen oder gefaltet. Hierbei kann auch eine anderweitige Profilierung des Bandes (26,27) stattfinden. Die Führungseinrichtung (29) kann z.B. als drehbare Rolle mit einem genuteten Mantel zur Bandverformung und ggf. mit einem gesteuerten Drehantrieb ausgebildet sein. Alternativ kann die Führungseinrichtung (29) als manipulatorgeführtes Formstück ohne eigene Bewegungsachse ausgebildet sein.

Die Verformung des Bands (26,27) kann durch weitere Maßnahmen, z.B. eine Erwärmung unterstützt werden. Ein erwärmtes Band (26), insbesondere ein Klebeband (27), lässt sich leichter dauerhaft verformen und behält die gewünschte Form bei der Applikation. Eine Erwärmung kann auf unterschiedliche Weise, z.B. konduktiv, induktiv, durch Infrarotstrahlung oder dgl., erfolgen. Die Erwärmung kann an und/oder vor der Führungseinrichtung (29) geschehen, wobei eine entsprechende, in Figur 2 schematisch dargestellte Erwärmungseinrichtung (36) an entsprechender Stelle an der Führungseinrichtung (29) und/oder der Medienversorgung (16), ggf. nach der Abzugeinrichtung (32), angeordnet ist.

Figur 5 bis 7 verdeutlichen einen solchen Anwendungsfall. Hierbei geht es um die Bildung von ein oder mehreren Falzen (9) am Außenrand eines Werkstücks oder Bauteils, hier z.B. einer Seitentüre eines Fahrzeugs. Ein entsprechender Falz (9) kann z.B. auch am Rand eines Fenster- oder Türausschnitts vorhanden sein. An der Falzbildung sind z.B. ein Innenteil (10) und ein Außenteil (11) beteiligt. Das Außenteil (11) wird mit seinem randseitig überstehenden Ende umgebogen bzw. gebördelt und übergreift dabei unter Bildung eines Falzes (9) den Rand des Innenteils (10).

Das Band (26) kann z.B. ein Klebe- oder Dichtband sein, welches um den Rand (5) des Innenteils (10) gelegt wird und diesen flanschartigen Rand (5) U-förmig umgreift. Das Klebe- oder Dichtband kann den Falz (9) und die Teile (10,11,) gegenseitig abdichten und versiegeln. Das Band (26) kann eine Klebewirkung haben. Es kann zusätzlich ggf. seine Form ändern, wobei es z.B. bei der Applikation ein Übermaß hat und bei der Falzbildung vom umgebogenen Außenteil (11) komprimiert wird. Die Formänderung kann alternativ im Nachhinein bewirkt werden, z.B. durch eine Aushärtereaktion, eine Erwärmung oder dgl., wodurch das Band (26) quillt und etwaige Hohlräume im Bereich des Falzes (9) ausfüllt. Es kann insoweit ein hochwirksames Dichtmittel für Falze (9) in der Rohbaufertigung für Fahrzeugteile bilden. Bislang übliche Zusatzkomponenten, wie Sealer oder dgl., können entfallen.

Wie Figur 6 und 7 verdeutlichen, kann der Falz (9) unterschiedliche Formen haben, wobei die Überdeckung des umgebördelten oder gefalzten Randes des Außenteils (11) unterschiedlich groß sein kann. Diese Überdeckung kann auch von der Art des Werkstücks und der jeweiligen Lage des Falzrandes an einem Eckbereich (7), einer Wölbung (6) oder einer Charakteristiklinie (8) beeinflusst sein. In entsprechender Weise muss auch das Band (26) nicht symmetrisch auf dem Innenteil (10) angebracht sein. Die beidseitigen Schenkellängen können differieren und lassen sich so ggf. an die jeweiligen Falzerfordernisse anpassen. Das gezeigte Band (26) kann außerdem bei der Applikation in Anpassung an die besonderen Formmerkmale des Werkstücks (3) bzw. seiner Bearbeitungsbahn (4), insbesondere Wölbungen (6) mit schwacher Krümmung, Eckbereiche (7) mit stärkerer Krümmung, Charakteristiklinien (8) oder dgl. durch Dehnung oder ggf. auch Stauchung angepasst sein.

In einer anderen Ausführungsform kann z.B. ein Klebeband (27) auf der Oberfläche eines Werkstücks (3) aufgelegt werden. Die Bearbeitungs- oder Applikationsbahn (4) kann hierbei eine von einer ebenen Form abweichende und dreidimensional konturierte Formgebung haben, die ggf. entlang des Bahnverlaufs wechselt. Auch hier können Wölbungen nach außen oder innen in der Bahnoberfläche, seitliche Krümmungen im Bahnverlauf oder dgl. vorhanden sein. Dies ist ebenfalls eine dreidimensionale Anwendung wie im vorbeschriebenen Ausführungsbeispiel. Auch hier kann durch den Manipulator (13) das Bearbeitungs- oder Applikationswerkzeug (15) entsprechend der Form und des Verlaufs der Bearbeitungsbahn (4) positioniert, ausgerichtet und ggf. angedrückt werden.

Bei dem Ausführungsbeispiel von Figur 4 kann der um seine Grundachse (I) rotierende Manipulator (13) das Bearbeitungs- oder Applikationswerkzeug (15) entlang der Bearbeitungsbahn (4) führen und dabei entsprechend unterschiedliche Ausrichtungen und Knick- oder Strecklagen einnehmen. Die Medienversorgung (16) kann ebenfalls an der Trageinrichtung (25) angeordnet sein und erlaubt z.B. eine zentrale Medienzuführung im Bereich der Grundachse (I) und einen Weitertransport über entsprechende Zuführ- und Transportmittel entlang des Manipulators (13) bis zum endseitigen Werkzeug (15). Alternativ kann die Zuführeinrichtung der Medienversorgung (16) einen mit dem Manipulator (13) rotierenden Ausleger haben, der am Ende das Medium (2,26) direkt an das Bearbeitungs- oder Applikationswerkzeug (15) übergibt.

Zwischen Werkzeug (15) und Medienversorgung (16) kann in den verschiedenen Ausführungsbeispielen ggf. ein Spalt oder Abstand (35) überbrückt werden. Die Zuführeinrichtung (31) kann alternativ oder zusätzlich flexibel sein und unter Minimierung oder Vermeidung einer Spalt- oder Abstandsbildung den Werkzeugbewegungen folgen.

Abwandlungen der gezeigten und beschriebenen Ausführungsformen sind in verschiedener Weise möglich. Ein Band (26), insbesondere ein Klebeband (27) kann als Alternative oder Ergänzung zu Figur 5, 6 und 7 am Außenteil (11) appliziert werden und ggf. beim Falzen mitgebogen werden.

Ferner können die Ausgestaltungen des Manipulators (13), des Werkzeugs (15) und der Medienversorgung (16) je nach Art des Mediums (2,26) und der jeweiligen Applikation oder Bearbeitung variieren. Eine Bearbeitung kann in einer Oberflächenbearbeitung des Werkstücks (3) oder in einem anderweitigen Auftrag eines z.B. flüssigen oder pastösen Mediums (2) bestehen. Ferner können mit einem entsprechenden Werkzeug (15) auch Umformprozesse oder Fügeprozesse durchgeführt werden, wobei am Werkzeug (15) nur leichte und ggf. bewegliche Werkzeugteile angeordnet sind und die schweren und massiven anderen Teile extern angeordnet sind. Eine Energie- oder Bewegungsübertragung kann z.B. hydraulisch, durch einen Seilzug oder auf andere Weise zum Werkzeug (15) und dessen Teilen erfolgen. Diese Energie- und insoweit Medienübertragung kann durch flexible Übertragungsmittel, wie Leitungen, Seilzüge oder dgl. bewirkt werden. Auch ein Fluidtransport von einer Medienversorgung (16) zum Applikationswerkzeug (15) kann durch flexible Leitungen oder dgl. bewirkt werden.

### BEZUGSZEICHENLISTE

- 1: Bearbeitungseinrichtung, Applikationseinrichtung
- 2: Medium
- 3: Werkstück, Türe
- 4: Bearbeitungsbahn, Applikationsbahn
- 5: Rand, Kante
- 6: Wölbung
- 7: Eckbereich
- 8: Charakterlinie, Knicklinie
- 9: Falz
- 10: Teil, Blech innen
- 11: Teil, Blech außen
- 12: Bewegungseinrichtung
- 13: Manipulator, Roboter für Applikation
- 14: Halteeinrichtung für Werkstück
- 15: Bearbeitungswerkzeug, Applikationswerkzeug
- 16: Medienversorgung
- 17: Manipulator, Roboter für Werkstück
- 18: Greifeinrichtung
- 19: Tisch, Träger
- 20: Glied
- 21: Glied
- 22: Glied
- 23: Glied, Abtriebsorgan, Hand
- 24: Sensor
- 25: Trageinrichtung, Portal
- 26: bahnförmiges Medium, Band
- 27: Klebeband
- 28: Deckband
- 29: Führungseinrichtung
- 30: Medienvorrat, Bandvorrat, Wickel
- 31: Zuführeinrichtung
- 32: Abzugeinrichtung
- 33: Entsorgungseinrichtung
- 34: Anschluss
- 35: Abstand, Spalt
- 36: Erwärmungseinrichtung

- I - VII: Achse

## Patentansprüche

1. Einrichtung zur bahnförmigen Bearbeitung von Werkstücken (3), insbesondere zur Applikation eines Mediums (2) an einem Werkstück (3), mit einem Bearbeitungswerkzeug (15), einer Medienversorgung (16) und einer Bewegungseinrichtung (12) zur Erzeugung einer Relativbewegung zwischen Medium (2) und Werkstück (3), wobei die Bewegungseinrichtung (12) einen mehrachsigen Manipulator (13) aufweist, der eine oder mehrere angetriebene nachgiebigen Achse I - VII hat und das Bearbeitungswerkzeug (15) führt, wobei die nachgiebige Achse(n) I - VII eine Nachgiebigkeitsregelung, nämlich eine reine Kraftregelung oder eine Kombination aus Positions- und Kraftregelung, aufweist und der Manipulator (13) mehrere gelenkig miteinander verbundene und gesteuert angetriebene Glieder (20,21,22,23) und einen oder mehrere Sensoren (24) zur Erfassung der Belastung von mindesten einem seiner Glieder (20,21,22,23), insbesondere zur Erfassung der einwirkenden Kräfte und/oder Momente, aufweist.

2. Einrichtung nach Anspruch 1, **dadurch gekennzeichnet, dass** die Bewegungseinrichtung (12) eine Halteeinrichtung (14) zum stationären oder instationären Halten des Werkstücks (3) aufweist.

3. Einrichtung nach Anspruch 1 oder 2, **dadurch gekennzeichnet, dass** ein Medium (2) bahnförmig, insbesondere als Band (26), bevorzugt als Klebeband (27), ausgebildet ist.

4. Einrichtung nach Anspruch 1, 2 oder 3, **dadurch gekennzeichnet, dass** eine Medienversorgung (16) örtlich getrennt vom Manipulator (13) und vom Bearbeitungswerkzeug (15), vorzugsweise stationär, angeordnet ist.

5. Einrichtung nach einem der vorhergehenden Ansprüche, **dadurch gekennzeichnet, dass** eine Medienversorgung (16) einen Medienvorrat (30), insbesondere einen Bandvorrat und eine Zuführeinrichtung (31) für das Medium (26), insbesondere ein Band (26) aufweist.

6. Einrichtung nach einem der vorhergehenden Ansprüche, **dadurch gekennzeichnet, dass** das Bearbeitungswerkzeug (15) als Applikationswerkzeug für ein Medium (2), insbesondere für ein bahnförmiges Medium (26,27), ausgebildet ist und eine Führungseinrichtung (29) zum Formen und Anlegen eines Mediums (2,26,27) an das Werkstück (3) aufweist.

7. Einrichtung nach einem der vorhergehenden Ansprüche, **dadurch gekennzeichnet, dass** die Einrichtung eine Erwärmungseinrichtung (36) für ein Medium (2), insbesondere für ein bahnförmiges Medium (26,27) aufweist.

8. Einrichtung nach einem der vorhergehenden Ansprüche, **dadurch gekennzeichnet, dass** sie als Applikationseinrichtung zur räumlichen Applikation eines räumlich verformten Bandes (26) ausgebildet ist.

9. Einrichtung nach einem der vorhergehenden Ansprüche, **dadurch gekennzeichnet, dass** die Sensoren (24) mit einer Manipulatorsteuerung oder mit einzelnen Achssteuerungen und den Achsantrieben gekoppelt sind.

10. Verfahren zur bahnförmigen Bearbeitung von Werkstücken (3), insbesondere zur Applikation eines Mediums (2) an einem Werkstück (3), mit einem Bearbeitungswerkzeug (15), einer Medienversorgung (16) und einer Bewegungseinrichtung (12) zur Erzeugung einer Relativbewegung zwischen Medium (2) und Werkstück (3), wobei das Bearbeitungswerkzeug (15) von einem mehrachsigen Manipulator (13) geführt wird, der eine oder mehrere angetriebene nachgiebige Achse(n) I - VII aufweist, wobei die nachgiebige Achse(n) I - VII auf Kraft oder auf Position und Kraft geregelt wird und der Manipulator (13) mehrere gelenkig miteinander verbundene und gesteuert angetriebene Glieder (20,21,22,23) und einen oder mehrere Sensoren (24) zur Erfassung der Belastung von mindesten einem seiner Glieder (20,21,22,23), insbesondere zur Erfassung der einwirkenden Kräfte und/oder Momente, aufweist.

11. Verfahren nach Anspruch 10, **dadurch gekennzeichnet, dass** durch die Nachgiebigkeit der Achse(n) I - VII die Bearbeitungskraft, insbesondere die Andrückkraft, auf einem vorbestimmten Wert, insbesondere konstant gehalten wird.

12. Verfahren nach Anspruch 10 oder 11, **dadurch gekennzeichnet, dass** das Bearbeitungswerkzeug (15) mittels der nachgiebigen Achse(n) I - VII federnd ausweichfähig gehalten und geführt wird.

13. Verfahren nach Anspruch 10, 11 oder 12, **dadurch gekennzeichnet, dass** ein Medium (2), insbesondere ein bandförmiges Medium (26), vorzugsweise ein Klebeband (27), an einem Werkstück (3) aufgebracht wird, wobei das Medium (2,26,27) von einer örtlich getrennten, insbesondere stationären Medienversorgung (16) dem Bearbeitungswerkzeug (15) am Manipulator (13) zugeführt wird.

14. Verfahren nach einem der Ansprüche 10 bis 13, **dadurch gekennzeichnet, dass** ein Medium (2), insbesondere ein bahnförmiges Medium (26,27), bei seiner Applikation verformt und an ein Werkstück (3) angelegt wird.

15. Verfahren nach einem der Ansprüche 10 bis 14, **dadurch gekennzeichnet, dass** ein Medium (2), insbesondere ein bahnförmiges Medium (26,27) vor oder bei der Applikation erwärmt wird.

## Claims

1. Device for the web-formed processing of workpieces (3), in particular for the application of a medium (2) to a workpiece (3), having a processing tool (15), a media-supply means (16) and a movement device (12) for generating relative movement between the medium (2) and workpiece (3), wherein the movement device (12) has a multi-axis manipulator (13), which has one or more driven, flexible axes I-VII and which guides the processing tool (15), wherein the flexible axis/axes I-VII has/have a flexibility-regulation function, that is to say purely a force-regulation function or a combination of position-regulation and force-regulation functions, and the manipulator (13) has a plurality of links (20, 21, 22, 23), which are connected to one another in an articulated manner and are driven in a controlled manner, and one or more sensors (24) for sensing the loading of at least one of its links (20, 21, 22, 23), in particular for sensing the forces and/or moments acting thereon.

2. Device according to Claim 1,
**characterized in that** the movement device (12) has a retaining device (14) for retaining the workpiece (3) in a stationary or non-stationary state.

3. Device according to Claim 1 or 2,
**characterized in that** a medium (2) is in the form of a web, in particular in the form of tape (26), preferably in the form of adhesive tape (27).

4. Device according to Claim 1, 2 or 3,
**characterized in that** a media-supply means (16) is arranged, preferably in a stationary state, in a spatially separate manner from the manipulator (13) and from the processing tool (15).

5. Device according to one of the preceding claims,
**characterized in that** a media-supply means (16) has a media store (30), in particular a tape store, and a feed device (31) for the medium (26), in particular a tape (26).

6. Device according to one of the preceding claims,
**characterized in that** the processing tool (15) is designed in the form of an application tool for a medium (2), in particular for a web-form medium (26, 27), and has a guide device (29) for forming a medium (2, 26, 27) and positioning it on the workpiece (3).

7. Device according to one of the preceding claims,
**characterized in that** the device has a heating device (36) for a medium (2), in particular for a web-form medium (26, 27).

8. Device according to one of the preceding claims,
**characterized in that** it is designed in the form of an application device for the three-dimensional application of a three-dimensionally deformed tape (26).

9. Device according to one of the preceding claims,
**characterized in that** the sensors (24) are coupled to a manipulator-control means or to individual axis-control means and the axis drives.

10. Method for the web-form processing of workpieces (3), in particular for the application of a medium (2) to a workpiece (3), having a processing tool (15), a media-supply means (16) and a movement device (12) for generating relative movement between the medium (2) and workpiece (3), wherein the processing tool (15) is guided by a multi-axis manipulator (13), which has one or more driven, flexible axes I-VII, wherein the flexible axis/axes I-VII is/are regulated in terms of force or of position and force and the manipulator (13) has a plurality of links (20, 21, 22, 23), which are connected to one another in an articulated manner and are driven in a controlled manner, and one or more sensors (24) for sensing the loading of at least one of its links (20, 21, 22, 23), in particular for sensing the forces and/or moments acting thereon.

11. Method according to Claim 10,
**characterized in that** the flexibility of the axis/axes I-VII keeps the processing force, in particular the pressure-exerting force, to a predetermined value, in particular constant.

12. Method according to Claim 10 or 11,
**characterized in that** the processing tool (15) is retained and guided in a state in which it is capable of resilient yielding by means of the flexible axis/axes I-VII.

13. Method according to Claim 10, 11 or 12,
**characterized in that** a medium (2), in particular a tape-form medium (26), preferably an adhesive tape (27), is applied to a workpiece (3), wherein the medium (2, 26, 27) is fed to the processing tool (15) on the manipulator (13) by a spatially separate, in particular stationary media-supply means (16).

14. Method according to one of Claims 10 to 13,
**characterized in that**, as it is being applied, a medium (2), in particular a web-form medium (26, 27), is deformed and positioned on a workpiece (3).

15. Method according to one of Claims 10 to 14,
**characterized in that** a medium (2), in particular a web-form medium (26, 27), is heated prior to, or during, application.

## Revendications

1. Dispositif de traitement en bande de pièces (3), en particulier pour l'application d'un agent (2) sur une pièce (3), avec un outil de traitement (15), une alimentation d'agent (16) et un dispositif de déplacement (12) pour la réalisation d'un déplacement relatif entre l'agent (2) et la pièce (3), dans lequel le dispositif de déplacement (12) présente un manipulateur multiaxe (13), qui a un ou plusieurs axe(s) souple(s) entraîné(s) I - VII et guide l'outil de traitement (15), dans lequel le/les axe(s) souple(s) I - VII présente(nt) un réglage de souplesse, à savoir un pur réglage de force ou une combinaison de réglages de position et de force, et le manipulateur (13) présente plusieurs éléments (20, 21, 22, 23) articulés l'un à l'autre et entraînés de façon commandée et un ou plusieurs capteur(s) (24) pour la détection de la charge d'au moins un de ses éléments (20, 21, 22, 23), en particulier pour la détection des forces et/ou des couples en action.

2. Dispositif selon la revendication 1, **caractérisé en ce que** le dispositif de déplacement (12) présente un dispositif de maintien (14) pour le maintien stationnaire ou non stationnaire de la pièce (3).

3. Dispositif selon la revendication 1 ou 2, **caractérisé en ce qu'**un agent (2) est réalisé en forme de bande, en particulier de ruban (26), de préférence comme ruban adhésif (27).

4. Dispositif selon la revendication 1, 2 ou 3, **caractérisé en ce qu'**une alimentation d'agent (16), de préférence stationnaire, est disposée de façon localement séparée du manipulateur (13) et de l'outil de traitement (15).

5. Dispositif selon l'une quelconque des revendications précédentes, **caractérisé en ce qu'**une alimentation d'agent (16) présente une réserve d'agent (30), en particulier une réserve de ruban et un dispositif de fourniture (31) pour l'agent (26), en particulier un ruban (26).

6. Dispositif selon l'une quelconque des revendications précédentes, **caractérisé en ce que** l'outil de traitement (15) est un outil d'application pour un agent (2), en particulier pour un agent en forme de bande (26, 27) et présente un dispositif de guidage (29) pour le formage et le dépôt d'un agent (2, 26, 27) sur la pièce (3).

7. Dispositif selon l'une quelconque des revendications précédentes, **caractérisé en ce que** le dispositif présente un dispositif de chauffage (36) pour un agent (2), en particulier pour un agent en forme de bande (26, 27).

8. Dispositif selon l'une quelconque des revendications précédentes, **caractérisé en ce qu'**il est constitué par un dispositif d'application pour l'application spatiale d'un ruban spatialement déformé (26).

9. Dispositif selon l'une quelconque des revendications précédentes, **caractérisé en ce que** les capteurs (24) sont couplés avec une commande de manipulateur ou avec des commandes d'axes individuelles et avec les entraînements d'axes.

10. Procédé de traitement en forme de bande de pièces (3), en particulier pour l'application d'un agent (2) sur une pièce (3), avec un outil de traitement (15), une alimentation d'agent (16) et un dispositif de déplacement (12) pour la réalisation d'un déplacement relatif entre l'agent (2) et la pièce (3), dans lequel l'outil de traitement (15) est guidé par un manipulateur multiaxe (13), qui présente un ou plusieurs axe(s) souple(s) entraîné(s) I - VII, dans lequel le/les axe(s) souple(s) I - VII sont réglés en ce qui concerne la force ou la position et la force et le manipulateur (13) présente plusieurs éléments (20, 21, 22, 23) articulés l'un à l'autre et entraînés de façon commandée et un ou plusieurs capteur(s) (24) pour la détection de la charge d'au moins un de ses éléments (20, 21, 22, 23), en particulier pour la détection des forces et/ou des couples en action.

11. Procédé selon la revendication 10, **caractérisé en ce que** l'on maintient à une valeur prédéterminée, en particulier constante, la force de traitement, en particulier la force de pression, au moyen de la souplesse de/des axe(s) I - VII.

12. Procédé selon la revendication 10 ou 11, **caractérisé en ce que** l'on maintient et on guide l'outil de traitement (15) en déviation élastique au moyen du/des axe(s) souple(s) I - VII.

13. Procédé selon la revendication 10, 11 ou 12, **caractérisé en ce que** l'on dépose un agent (2), en particulier un agent en forme de bande (26), de préférence un ruban adhésif (27), sur une pièce (3), dans lequel on fournit l'agent (2, 26, 27) à partir d'une alimentation d'agent (16) localement séparée, en particulier stationnaire, à l'outil de traitement (15) sur le manipulateur (13).

14. Procédé selon l'une quelconque des revendications 10 à 13, **caractérisé en ce que** l'on déforme un agent (2), en particulier un agent en forme de bande (26, 27), lors de son application et on le dépose sur une pièce (3).

15. Procédé selon l'une quelconque des revendications 10 à 14, **caractérisé en ce que** l'on chauffe un agent (2), en particulier un agent en forme de bande (26, 27), avant ou pendant l'application.
